# EUROPÄISCHE PATENTANMELDUNG

(11) **EP 1 704 981 A1**
(43) Veröffentlichungstag der Anmeldung: **27.09.2006**
(21) Anmeldenummer: 06005838.5
(22) Anmeldetag: 22.03.2006
(51) Int. Cl.: B29C 44/18, B29C 44/32

(54) **Verfahren und Einrichtungen zur Herstellung eines plattenförmigen Bauelementen**

(30) Priorität: 22.03.2005 DE 102005013724
(71) Anmelder: Viessmann Kältetechnik AG, 95030 Hof/Saale (DE)
(72) Erfinder: Gebelein, Bermd, D-95179 Geroldsgrün (DE)
(74) Vertreter: Wolf, Günter

(57) **Zusammenfassung**

Die Erfindung betrifft ein Verfahren und Einrichtungen zur Herstellung von plattenförmigen Bauelementen, die nach Sandwichart aus einer zwischen zwei äußeren Deckflächen (1,2) angeordneten Waben- bzw. Gitterstützstruktur (3) und aus der in der Vielzahl der Strukturräume (4) befindlichen, verschäum- und aushärtbaren Füllstoffmasse gebildet sind. Vorgesehen ist dabei, daß eine der Deckflächen, die die eine Außenhaut des Bauelementes zu bilden hat, in eine an den Flächenzuschnitt angepaßte Formschale eingelegt und auf diese die noch flüssige Füllstoffmasse aufgegossen, in die flüssige Masse die ebenfalls zuschnittsangepaßte Stützstruktur eingetaucht und auf die Deckfläche aufgesetzt und danach auf die Stützstruktur die andere, die andere Außenfläche des Bauelementes bildende, Deckfläche aufgelegt wird, wobei während der sogenannten Steig- und Abbindezeit der Füllstoffmasse unter Luftabfuhr aus allen Strukturräumen die beiden Deckflächen gegen die Stützstruktur anliegend zusammengehalten werden.

## Beschreibung

Die Erfindung betrifft ein Verfahren gemäß Oberbegriff des unabhängigen Patentanspruches 1 und bezieht sich ferner auf Einrichtungen zur Herstellung solcher plattenförmigen Bauelemente, die nach Sandwichart aus einer zwischen zwei äußeren Deckflächen angeordneten Waben- bzw. Gitterstützstruktur gebildet sind und aus der in der Vielzahl der Strukturräume befindlichen, verschäum- und aushärtbaren Füllstoffmasse.

Bauelemente der genannten Art, bei deren verschäumbaren Füllstoffmasse es sich in der Regel um PU-Schaum handelt, sind in unterschiedlichen Ausführungsformen bspw. nach der DE-A-203 16 549 U1 und auch nach der EP-A-0 980 937 A2 bekannt und, was die Gitter-Stützstruktur selbst betrifft, so ist auf die GB-A-937 470 A zu verweisen. Bei diesen Bauelementen handelt es sich um vorgefertigte Bodenplatten und Wandbauelemente zur Erstellung von sogenannten Raumzellen, die insbesondere als Kühl- und Frischhaltezellen, als Reinraumzellen zur Verwendung kommen oder auch als einzuziehende Raumtrennwände. Zu verweisen ist bezüglich solcher Bauelemente und Verfahrensweisen zu ihrer Herstellung außerdem auf die DE-A-17 29 056, die US-A-2,744,042 und die US-A-4,162,341.

Beim Gegenstand der DE-A-17 29 056 handelt es sich um die Herstellung wabenförmig strukturierter Formkörper mit wärmedämmender Füllung, wobei allerdings der fertige Formkörper keine beidseitigen Deckflächen aufweist. Gemäß der US-A-2,744,042 erfolgt die Herstellung ohne Benutzung einer Formschale, wobei die Räume einer auf eine Deckfläche aufgesetzten Wabenstruktur gefüllt und die andere Deckfläche erst aufgesetzt und unter Preßdruck gehalten wird, wenn die Luft aus den einzelnen Strukturräumen abgeströmt ist. Ähnlich wie beim Verfahren nach der DE-A-17 29 056 wird auch beim Verfahren nach der US-A-4,1 62,341 vorgegangen, indem eine wabenartige Struktur in eine an die Endform nicht angepaßte Formschale eingesetzt wird, in die vorher mit einer gewissen Füllstandshöhe das noch flüssige, verschäumbare Material eingefüllt wurde. Eine nicht zum Endprodukt gehörende Druckplatte wird erst aufgesetzt, wenn das sich verschäumende Material oben aus der Wabenstruktur herauszuquellen beginnt.

Unter Beibehaltung der vorteilhaften Maßgabe einer möglichst gleichmäßigen Verteilung verschäumbaren Materials in die Vielzahl der Wabenstrukturräume liegt der Erfindung die Aufgabe zugrunde, und zwar ausgehend vom Verfahren gemäß Oberbegriff des Patentanspruches 1, dieses dahingehend umzugestalten und zu verbessern, daß beide Deckflächen des fertigen Bauelementes bei der Herstellung in einer der Bauelementform entsprechenden Formschale mit einbeziehbar sind und dabei für die Luftabfuhr gesorgt wird.

Diese Aufgabe ist nach der Erfindung durch die im Kennzeichen des unabhängigen Patentanspruches 1 angeführten Merkmale gelöst. Vorteilhafte Weiterbildungen und Ausführungsformen ergeben sich nach den auf das Verfahren bezogenen abhängigen Patentansprüchen.

Anders ausgedrückt wird also so vorgegangen, daß eine der Deckflächen, die die eine Außenhaut des Bauelementes zu bilden hat, in eine an den Flächenzuschnitt angepaßte Formschale eingelegt und auf diese die noch flüssige Füllstoffmasse aufgegossen, in die flüssige Masse die ebenfalls zuschnittsangepaßte Stützstruktur eingetaucht und auf die in der Formschale bereits befindliche Deckfläche aufgesetzt und danach auf die Stützstruktur die andere, die andere Außenhaut des Bauelementes bildende Deckfläche aufgelegt wird, wobei während der so genannten Steig- und Abbindezeit der Füllstoffmasse unter Luftabfuhr aus allen Strukturräumen die beiden Deckflächen gegen die Stützstruktur anliegend zusammengehalten werden.

Wesentlich ist dabei auch, daß, da sich ja die Stützstruktur mit ihrer Vielzahl von Einzelräumen eingespannt zwischen den beiden Deckplatten befindet, für eine Luftabfuhr trotz aufgelegter zweiter Deckfläche gesorgt wird, und zwar mit Rücksicht darauf, daß ja während der sogenannten Steigzeit, die Raumvolumina in der Stützstruktur fortschreitend von der sich verschäumenden Füllstoffmasse eingenommen werden. Eine solche gezielte Luftabfuhr - die dafür erforderlichen apparativen Maßnahmen werden noch näher erläutert - sorgt auch dafür, daß sich in den einzelnen Strukturräumen die Verschäumung weitestgehend gleichmäßig vollziehen kann.

Wie sich gezeigt hat, führt diese Verfahrensweise zum gewünschten Erfolg, da einerseits die Zufuhr der Füllstoffmasse einfach, d. h., ohne Rücksicht auf die noch nicht vorhandene Stützstruktur auf die unterliegende Deckplatte erfolgen kann, wobei dann andererseits durch die nachträgliche Aufbringung der Stützstruktur per Eintauchen in die noch flüssige Masse Gewähr dafür gegeben ist, daß in jedem Raum der Stützstruktur die gleiche Flüssigkeitsmenge ansteht. Außerdem ist mit dieser Verfahrensweise der Vorteil verbunden, daß sich automatisch eine Verbindung zwischen der Stützstruktur und den beiden Deckflächen ergibt, d. h., eine separate Verklebung mittels Klebern ist entbehrlich.

Bezgl. der zu beachtenden Füllstandshöhe der flüssigen Masse auf der unterliegenden Deckplatte können keine verbindlichen Angaben gemacht werden, da sich diese nach verschiedenen Parametern richtet. Maßgebend ist nämlich dafür, wie die flüssige Masse bezgl. ihres maximal möglichen Schaumvolumens eingestellt ist, welches Volumen die Räume in der Stützstruktur haben und, damit im Zusammenhang stehend, welche Dichte man für die sich einstellende Schaumstruktur haben möchte.

Für den Aufgießvorgang ist vorteilhaft vorgesehen, daß der Aufguß der noch flüssigen Füllstoffmasse auf die eine in die Formschale eingebrachte Deckplatte an mehreren gleichmäßig verteilten Stellen gleichzeitig und mit gleicher Menge durchgeführt oder daß der Aufguß der noch flüssigen Masse auf die Deckplatte fortlaufend unter kontinuierlicher Erfassung von deren Gesamtfläche bewirkt wird. Damit wird schon beim Aufgießen dafür gesorgt, daß für die gleichmäßige Ausbreitung der flüssigen Masse und Abdeckung der ganzen Deckplatte weniger Zeit benötigt wird, als wenn der Aufguß nur an einer zentralen Stelle erfolgte.

Insbesondere die kontinuierliche Erfassung der Gesamtfläche macht das ganze Verfahren auch dafür geeignet, kontinuierlich durchgeführt zu werden, nämlich derart, daß die zu begießenden, in ihrer Formschale befindlichen Deckplatten kontinuierlich unmittelbar hintereinander dem Begießen zugeführt werden, wobei dann während der Weiterförderung die Stützstruktur und die andere Deckplatte aufgelegt werden.

Bezüglich des hier verwendeten Begriffes Deckplatten sei darauf hingewiesen, daß diese zum Einen aus allen möglichen Materialien, wie Blech, Spanplatten, Faserplatten, Gipsplatten oder dgl. bestehen können, und daß es sich zum Anderen auch um mehr oder weniger steife Kunststoff- oder Metallfolien handeln kann.

Das erfindungsgemäße Verfahren und die insoweit besonderen Einrichtungen zu seiner Durchführung werden nachfolgend anhand der zeichnerischen Darstellung von Ausführungsbeispielen näher erläutert.

Es zeigt schematisch
- Fig. 1: perspektivisch und teilweise aufgeschnitten ein plattenförmiges Bauelement;
- Fig. 2: im Schnitt das Bauelement gemäß Fig. 1 während seiner Herstellung;
- Fig. 3: perspektivisch das Ausführungsbeispiel einer Stützstruktur und
- Fig. 4: das Verfahren bei kontinuierlicher Fertigung der Bauelemente.

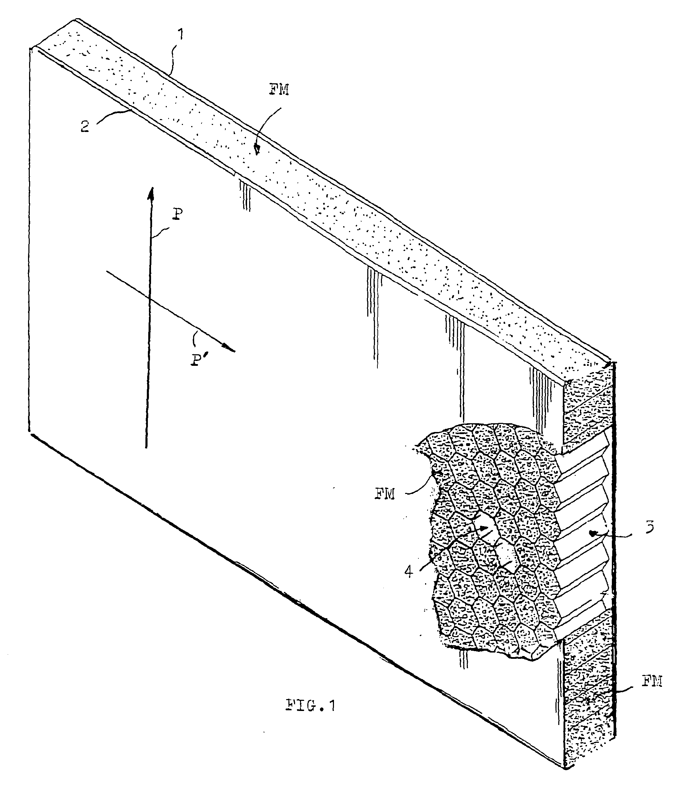

In Fig. 1 ist das Beispiel eines einfachen Wandbauelementes für die Erstellung von Raumzellen der eingangs genannten Art dargestellt, und zwar unter Verzicht auf hier nicht interessierende Details bzgl. besonderer Randgestaltungen und von Verbindungselementen, wie sie beim zusammenfügen solcher Elemente bspw. zu Wandzügen in der Regel erforderlich sind.

Wie aus Fig. 1 ersichtlich, handelt es sich bei solchen plattenförmigen Wandelementen um solche, die nach Sandwichart aus einer zwischen zwei äußeren Deckflächen 1, 2 angeordneten Waben- bzw. Gitterstützstruktur 3 gebildet sind und aus der in der Vielzahl der Strukturräume 4 befindlichen, verschäum- und aushärtbaren Füllstoffmasse FM, wie bspw. PU-Schaum, der im Nebeneffekt auch Wärmeisolationseigenschaften hat. Die in Fig. 1 dargestellte Wabenstruktur ist nicht verbindlich, d.h. es kann sich diesbezüglich auch um eine Stützstruktur im Sinne der Fig. 3 handeln.

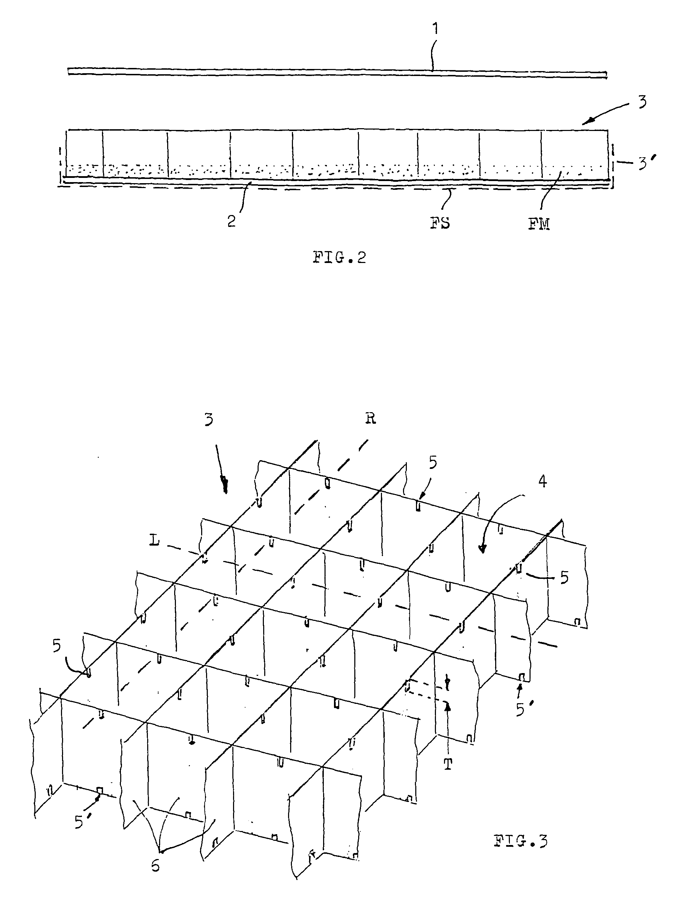

Zur Herstellung solcher Bau- bzw. Wandbauplatten wird nun unter Verweis auf Fig. 2 erfindungsgemäß so vorgegangen, daß eine der Deckflächen 1, 2 (hier die Deckfläche 2) in eine an den Flächenzuschnitt angepaßte Formschale FS eingelegt und auf diese die noch flüssige Füllstoffmasse FM in erforderlicher Stärke aufgegossen wird. Die flüssige Füllstoffmasse FM ist dabei per ihrem Chemismus so eingestellt, daß deren sogenannte Topfzeit ausreicht, um in die flüssige Füllstoffmasse FM die ebenfalls zuschnittsangepaßte Stützstruktur 3 eintauchen und auf die Deckfläche 2 aufsetzen zu können. Danach wird auf die gegen die Deckfläche 2 gedrückte Stützstruktur die andere Deckfläche 1 aufgelegt. Während der sogenannten Steig- und Abbindezeit der Füllstoffmasse FM werden unter Luftabfuhr aus allen Strukturräumen 4 die beiden Deckflächen 1, 2 gegen die Stützstrukur 3 anliegend zusammengehalten. Nach Aushärtung bzw. Ablauf der sogenannten Abbindezeit für die Füllstoffmasse FM kann dann das Bauelement aus seiner in Fig. 2 nur gestrichelt angedeuteten Formschale FS entnommen werden. Die Höhe der Formseitenflanken 3' ist so bemessen, daß zwischen Oberfläche Stützstrukur und aufgelegter Deckfläche 1 ein feiner Spalt bleibt, aus dem die aus den Strukturräumen 4 durch die Aufblähung der Füllstoffmasse FM ausgetriebene Luft entweichen kann.

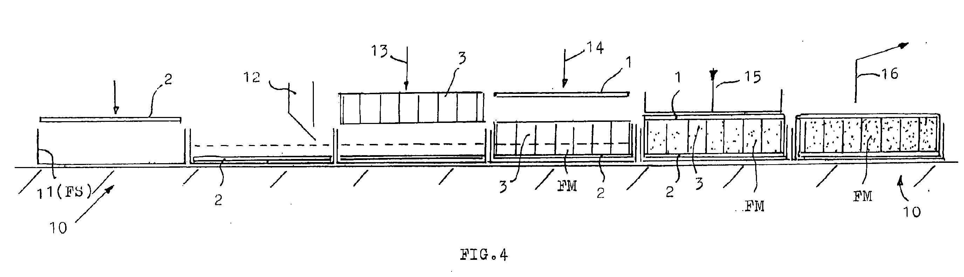

Der Aufguß der noch flüssigen Füllstoffmasse FM auf die eine in die Formschale FS eingebrachte Deckfläche 1 wird entweder zwecks schneller und gleichmäßiger Verteilung über die ganze Deckfläche 2 vorteilhaft an mehreren gleichmäßig verteilten Stellen gleichzeitig und mit gleicher Menge durchgeführt oder in der Weise, daß der Aufguß der noch flüssigen Füllstoffmasse FM auf die Deckfläche 2 fortlaufend unter kontinuierlicher Erfassung von deren Gesamtfläche bewirkt wird. Für die erstgenannte Art sind dafür bspw. mehrere Ausgießtüllen vorgesehen oder für den zweiten Fall ist nur eine sich quer in Pfeilrichtung P zur Fläche bewegbare Ausgießtülle vorhanden, unter der die Deckfläche 2 in Pfeilrichtung P' bewegt wird. Insbesondere diese letztgenannte Art kommt auch für eine kontinuierliche Fertigung in Betracht, wie sie in Fig. 4 schematisch dargestellt ist, gemäß der die zu begießenden, in ihrer Formschale FS befindlichen Deckflächen 2 kontinuierlich unmittelbar hintereinander dem Begießen zugeführt werden.

Für die bereits angesprochene Luftabfuhr während der sogenannten Steigzeit ist die Stützstruktur 3 gemäß Fig. 3 mindestens zur Auflageseite der zweiten, nachträglich aufzulegenden Deckfläche 1 hin mit alle Stützstrukturräume 4 untereinander kommunizierend verbindenden Schlitzungen 5 in den die Räume 4 begrenzenden Wandungen 6 versehen. Für die Anbringung dieser Schlitzungen 5 wird die ganze Stützstruktur 3 längs entsprechender Linien kreuz und quer bspw. mit einem dünnen Sägeblatt entsprechend tief, d. h., um etwa nur 2 bis 3 mm tief angeschlitzt, was ausreicht, um die Luft entweichen und keinen gegen die Aufblährichtung der Füllstoffmasse FM gerichteten Gegendruck entstehen zu lassen. Um sicherheitshalber auch für die aufgegossene Füllstoffmasse FM nach dem Eintauchen der Stützstruktur 3 innerhalb von Raum zu Raum 4 eine Kommunizierung zuzulassen, können auch, wie ebenfalls in Fig. 3 mit angedeutet, bodenseitig an der Stützstruktur 3 Schlitzungen 5' vorgesehen werden, die jedoch etwas breiter als die anderen Schlitzungen 5 angelegt sein sollten.

Abgesehen von den Schlitzungen 5 wäre es für eine Entlüftung der Stützstrukturräume 4 aber auch möglich, die abschließend aufzulegende Deckfläche 1 mit einer Feinlochung zu versehen, was nicht besonders dargestellt ist. In diesem Falle müßte eine die Deckfläche 1 gegen den Verschäumungsdruck haltende Preßplatte als Gitterplatte ausgebildet sein.

Sofern es sich bei den Deckflächen 1, 2 um dünnes bspw. Edelstahlblech handelt, kann auch in Betracht gezogen werden, die mit Füllstoffmasse FM zu begießende Deckfläche 2 mit einer ausreichend hohen, ringsum laufenden Randaufkröpfung zu versehen, so daß eine angepaßt schalenförmige Form entbehrlich wird und die Form nur noch aus vier gegen die Randaufkröpfungen heranstellbaren Leisten bestehen kann, was auf der Hand liegend für die Entnahme des fertigen Bauelementes vorteilhaft ist.

Sollte auch die aufzulegende Deckfläche 1 mit einer solchen Randaufkröpfung versehen sein, so müßte an dieser, wie vorerwähnt, eine flächige Feinlochung vorgesehen werden oder eine Feinlochung im Bereich der Randaufkröpfung.

Der Vollständigkeit halber ist stark schematisiert in Fig. 4 der Verfahrensablauf bei kontinuierlicher Fertigung dargestellt, wobei entsprechende Bezugszeichen benutzt sind. Eine solche Vorrichtung weist dabei einen Fördertisch 10 mit mehrfacher Länge eines Bauelementes auf, wobei dem Fördertisch 10 in Folge zugeordnet sind:
Mehrere Formen 11 zur Aufnahme jeweils einer Deckfläche 2; eine Aufgießeinrichtung 12 für die flüssige Füllstoffmasse FM; eine Aufbring- und Eintaucheinrichtung 13 für die Stützstrukturen 3; eine Aufbringeinrichtung 14 für die Deckflächen 1; eine Druckeinrichtung 15 für die Deckfläche 1 und schließlich eine Entnahmeeinrichtung 16 für die fertigen Bauelemente.

Die Formen 11 können dabei Teile eines Endlosförderers sein. Gleiches gilt auch für die Einrichtung 13, wobei diese, wie auch die Einrichtung 14, als Querförderer zum Fördertisch 10 anzuordnen ist, während es sich bei der Druckeinrichtung 15 um mehrere im Fördertakt und in Förderrichtung mitlaufende Druckplatten handelt, die ebenfalls Teile eines Endlosförderers sein können. Dies im Einzelnen näher zu erläutern ist entbehrlich, da dafür allgemein bekannte konstruktive Möglichkeiten zur Verfügung stehen.

## Patentansprüche

1. Verfahren zur Herstellung eines plattenförmigen Bauelementes, das nach Sandwichart aus einer zwischen zwei äußeren Deckflächen (1, 2) angeordneten Waben- bzw. Gitterstützstruktur (3) und aus einer in der Vielzahl der Strukturräume (4) befindlichen, verschäum- und aushärtbaren Füllstoffmasse (FM) gebildet ist, bei dem in eine an den Flächenzuschnitt angepaßte Formschale (FS) die noch flüssige Füllstoffmasse aufgegossen, in die flüssige Masse die zuschnittsangepaßte Stützstruktur eingetaucht und aufgesetzt und danach auf die Stützstruktur (3) eine Deckfläche aufgelegt wird,
**dadurch gekennzeichnet,**
**daß** die andere Deckfläche in die Formschale eingelegt und auf diese die Stützstruktur nach Eingießen der Füllstoffmasse aufgesetzt wird, wobei während der sogenannten Steig- und Abbindezeit der Füllstoffmasse unter Luftabfuhr die beiden Deckflächen gegen die Stützstruktur anliegend zusammengehalten werden.

2. Verfahren nach Anspruch 1,
**dadurch gekennzeichnet,**
**daß** der Aufguß der noch flüssigen Füllstoffmasse auf die eine in die Formschale eingebrachte Deckplatte an mehreren gleichmäßig verteilten Stellen gleichzeitig und mit gleicher Menge durchgeführt wird.

3. Verfahren nach Anspruch 1,
**dadurch gekennzeichnet,**
**daß** der Aufguß der noch flüssigen Füllstoffmasse auf die Deckplatte fortlaufend unter kontinuierlicher Erfassung von deren Gesamtfläche bewirkt wird.

4. Verfahren zur Herstellung mehrerer plattenförmiger Bauelemente nach einem Verfahren gemäß einem der Ansprüche 1 bis 3,
**dadurch gekennzeichnet,**
**daß** die zu begießenden, in ihrer Formschale befindlichen Deckflächen kontinuierlich unmittelbar hintereinander dem Begießen zugeführt werden.

5. Verfahren nach einem der Ansprüche 1 bis 4,
**dadurch gekennzeichnet,**
**daß** eine Stützstruktur (3) verwendet wird, die mindestens zur Auflageseite der zweiten, nachträglich aufzulegenden Deckplatte (2) hin mit alle Stützstrukturräume (4) untereinander kommunizierend verbindenden Schlitzungen (5) in den die Räume (4) begrenzenden Wandungen (6) versehen ist.

6. Verfahren nach Anspruch 5,
**dadurch gekennzeichnet,**
**daß** die zu verwendende Stützstruktur die Schlitzungen (5) in einer jeweils eine Raumreihe (R) der Stützstruktur (3) erfassenden Linie (L) enthält und die Schlitzungen (5) mit einer Tiefe (T) von 2 bis 3 mm bemessen sind.

7. Verfahren nach Anspruch 5 oder 6,
**dadurch gekennzeichnet,**
**daß** eine Stützstruktur (3) verwendet wird, die gegenüber den Schlitzungen (5) auf der anderen Seite der Stützstruktur (3) breitere Schlitzungen (5') für den Durchtritt flüssiger Füllstoffmasse (FM) aufweist.

8. Verfahren nach einem der Ansprüche 1 bis 7,
**dadurch gekennzeichnet,**
**daß** als aufzulegende Deckfläche (2) eine solche mit einer Feinlochung verwendet wird.

9. Vorrichtung zur kontinuierlichen Durchführung des Verfahrens nach einem der Ansprüche 1 bis 8,
**gekennzeichnet durch**
einen Fördertisch (10) mit mehrfacher Länge eines Bauelementes, wobei dem Fördertisch (10) in Folge zugeordnet sind:
mehrere Formen (11) zur Aufnahme jeweils einer Deckfläche (2);
eine Aufgießeinrichtung (12) für die flüssige Füllstoffmasse (FM);
eine Aufbring- und Eintaucheinrichtung (13) für die Stützstrukturen (3);
eine Aufbringeinrichtung (14) für die Deckflächen (1);
eine Druckeinrichtung (15) für die Deckfläche (1) und
eine Entnahmeeinrichtung (16) für die fertigen Bauelemente.
